# EUROPEAN PATENT APPLICATION

(11) **EP 4 596 394 A1**
(43) Date of publication of application: **06.08.2025**
(21) Application number: 24154818.9
(22) Date of filing: 30.01.2024
(51) Int. Cl.: B64C 1/10, B64C 1/06

(54) **PRESSURE BULKHEAD DEVICE, AIRCRAFT FUSELAGE AND AIRCRAFT**

(71) Applicant: Airbus Operations GmbH, 21129 Hamburg (DE)
(72) Inventor: Siemann, Martin, 21129 Hamburg (DE); Benthien, Hermann, 21129 Hamburg (DE)

(57) **Abstract**

The present invention provides a pressure bulkhead device (1) for an aircraft fuselage (10), the pressure bulkhead device (1) comprising: a first side (2) extending along a vertical direction (Zb) and facing a pressurizable compartment; a second side (3) arranged opposite the first side (2), wherein the first side (2) is pressurizable with an internal pressure that is higher than an ambient pressure being present at the second side (3); and an energy absorbing section (4) [or energy absorbing mechanism, respectively], which is configured to absorb impact energy, and is arranged at least at a lower end region (5) of the first side (2) and the second side (3) in relation to the vertical direction (Zb). Further the present invention provides an aircraft fuselage (10) comprising such a pressure bulkhead device (1) as well as an aircraft (100) comprising such an aircraft fuselage (10).

## Description

The invention relates to a pressure bulkhead device for an aircraft fuselage as well as to an aircraft fuselage containing such a device. The invention is furthermore concerned with an aircraft containing such an aircraft fuselage.

Pressurized cabins or pressurized regions in which a safe and comfortable internal pressure prevails during the flight are customarily provided inside the fuselage structure of an aircraft. The pressurized regions, such as, for example, the passenger cabin or the cargo area are separated in a pressure-tight manner from non-pressurized regions, in which the respectively present ambient pressure prevails, by means of what are referred to as pressure bulkheads.

Usually, a pressure bulkhead is customarily arranged in a rear end portion of the fuselage structure and secured to the fuselage structure by means of securing devices. In conventional aircrafts the rear pressure bulkhead is typically located at the rear end portion of the fuselage structure. Therefore those bulkheads usually do not take into account crash energy absorption.

For example, document DE 10 2017 219 073 A1 describes a fuselage structure for an aircraft, comprising a fuselage vessel extending in a longitudinal direction, and a pressure bulkhead arranged in an end region of the fuselage vessel and having a central region extending in a planar manner and a connection region adjoining the central region in a radial direction and surrounding said central region and being secured to the fuselage vessel. The pressure bulkhead divides the fuselage vessel with respect to the longitudinal direction into a first region and a second region.

In hydrogen-powered aircrafts, for example, the pressure bulkhead could be arranged before the rear end portion of the fuselage structure in order to arrange hydrogen tanks in the aft fuselage, that means in the caudal configuration. Therefore, the rear pressure bulkhead could be involved in structural deformations of the fuselage during a potential impact scenario.

According to the invention, this problem is solved in each case by the subject matters of the independent claims.

According to a first aspect of the invention, a pressure bulkhead device for an aircraft fuselage is provided. The pressure bulkhead device comprises a first side extending along a vertical direction and facing a pressurizable compartment. The pressure bulkhead device further comprises a second side arranged opposite the first side. The first side is pressurizable with an internal pressure that is higher than an ambient pressure being present at the second side. Further, the pressure bulkhead device comprises an energy absorbing section or energy absorbing mechanism, respectively, which is configured to absorb impact energy (in other words: The energy absorbing section or energy absorbing mechanism, is configured to absorb kinetic energy). Moreover, the energy absorbing section is arranged at least at a lower end region of the first side and the second side in relation to the vertical direction.

According to a second aspect of the invention, an aircraft fuselage comprising a device according to the invention is provided. The aircraft fuselage comprises a pressurizable compartment, which is pressurizable with an internal pressure. The aircraft fuselage further comprises an adjacent compartment, which comprises an ambient pressure that is lower than the internal pressure. Further, the aircraft fuselage comprises a pressure bulkhead device according to the first aspect of the invention. The pressure bulkhead device separates the pressurizable compartment from the adjacent compartment.

According to a third aspect of the invention, an aircraft comprising an aircraft fuselage according to the second aspect of the invention is provided.

A fundamental concept of the invention is to improve the structural behavior of the aircraft fuselage during a potential, undesired crash scenario when equipped with the pressure bulkhead device. Therefore, an energy absorption functionality is integrated into the pressure bulkhead device by allowing at least the lower end region of the pressure bulkhead device to absorb crash energy. For example in some scenarios, an impact originating from an undesired contact with the ground surface may be at least partially absorbed by this functionality. For example, in hydrogen-powered aircraft configurations with a caudal tandem tank configuration, the pressure bulkhead device can be arranged more toward the center of the aircraft in order to fit a hydrogen tank into the aft fuselage.

For example, the energy absorbing section or energy absorbing mechanism, respectively, is configured to absorb kinetic energy by a plastic deformation and/or by progressive structural failure. In particular, the energy absorbing section or energy absorbing mechanism, respectively, is configured to absorb impact energy. A frame of the aircraft fuselage that the pressure bulkhead device can be attached to may comprise a corresponding flange to attach the pressure bulkhead device. Furthermore, stringer couplings can be used to connect the pressure bulkhead device to the fuselage shells around the circumference of the aircraft fuselage.

The vertical direction of the pressure bulkhead device can correspond to a vertical direction of the aircraft fuselage. That means that the pressure bulkhead device can be used as a support structure, which can be integrated in the aircraft fuselage, wherein the vertical direction of the pressure bulkhead device has an angle in the range of about 60° to about 120°, for example in the range of about 75° to about 105°, in particular in the range of about 82° to about 98°, more preferably an angle of about 90°, relative to a longitudinal direction of the aircraft fuselage or relative to a transverse direction of the aircraft fuselage. In particular, the pressure bulkhead device can be arranged at any position along the longitudinal direction of the aircraft fuselage.

For example, the aircraft can be configured as a hydrogen-powered aircraft.

A particular advantage in the solution according to an aspect of the invention is that the energy absorbing section according to the invention enables a continuous deformation of the aircraft fuselage along its longitudinal direction in order to enable a more homogeneous crash energy absorption along the aircraft fuselage.

Another advantage is that the pressure bulkhead device according to the invention improves an overall crash behavior of the aircraft fuselage, in particular of a fuselage portion behind the center of the aircraft.

Furthermore, the pressure bulkhead device according to the invention has a greater involvement in potential crash scenarios compared to conventional aircraft configurations.

Advantageous embodiments and further developments emerge from the description with reference to the figures.

According to some embodiments of the invention, the energy absorbing section comprises a flat or corrugated shape. In other words, the first side and/or the second side can comprise a flat or corrugated shape in the energy absorbing section. Thus, the flat or corrugated shape can minimize a required space for the pressure bulkhead device. For example, the energy absorbing section can comprise a corrugated web.

According to some further embodiments of the invention, the pressure bulkhead device further comprises a structural unit, which is configured to stiffen the pressure bulkhead device, wherein at least an area of the structural unit extends in the energy absorbing section, wherein the at least an area of the structural unit is configured to absorb impact energy by a plastic deformation and/or by a progressive structural failure of the at least an area of the structural unit. Thus, the energy absorbing section is stiffened by the structural unit and also provides the energy absorbing functionality. For example, the structural unit can extend in the energy absorbing section substantially in the vertical direction.

Furthermore, the structural unit can extend in the pressure bulkhead device substantially in the vertical direction. Hence, the structural unit can extend in the energy absorbing section. That means, the energy absorbing section can comprise a structural unit for stiffening the energy absorbing section. Thereby, the structural unit can substantially extend in the vertical direction. Thus, the energy absorbing section is stiffened by the structural unit and also provides the energy absorbing functionality in the vertical direction. Alternatively, the structural unit can extend in the pressure bulkhead device, and at least another section of the pressure bulkhead device.

According to some further embodiments of the invention, the at least an area of the structural unit comprises a curved, rectangular, triangular, corrugated and/or square cross-sectional profile shape. In particular, the at least an area of the structural unit comprises a double-T, a sinusoidal and/or a trapezoidal cross-sectional profile shape. Hence, easy to manufacture profile shapes can be used, wherein the energy absorbing capabilities of such profile shapes are well known. Additionally or alternatively, the at least an area of the structural unit forms a closed or an open profile. The open profile has the further advantage that fragments produced during the structural failure of the structural unit can be pushed away easier and thus such structural units experience a later compaction compared to a structural unit based on closed profiles.

Moreover, the energy absorbing section can comprise a diaphragm, which is coupled to the at least an area of the structural unit. For example, the at least an area of the structural unit comprises combinations of square tubes with diaphragms between the square tubes. Furthermore, the combinations of square tubes with diaphragms can have different heights in order to obtain excellent energy absorption characteristics such as high energy absorption, low initial peak force, and small force fluctuations.

According to some further embodiments of the invention, the structural unit comprises a cross-sectional geometry that varies along the vertical direction. Hence, the progressive energy absorption can be further improved. For example, the cross-sectional geometry increases at least sectionwise along the vertical direction, in particular in order to enable crash energy absorption in a lower region of a bulkhead section of the pressure bulkhead device and to stop the plastic deformation or the progressive structural failure after a defined crushing length.

For example, the structural unit can comprise at least two parts, wherein a first part is arranged in the energy absorbing section and a second part is arranged in the bulkhead section having different mechanical properties and/or dimensions than the first part of the structural unit.

According to some further embodiments of the invention, the energy absorbing section is configured to provide a stable, progressive energy absorption in the vertical direction. Hence, energy is absorbed by the energy absorbing section or energy absorbing mechanism, respectively, in a stable and continuous process during a potential impact.

According to some further embodiments of the invention, the energy absorbing section is configured to provide at least two predetermined energy absorption stages each having a different energy absorption capacity. As a result, a gradual or a cascaded energy absorption behavior can be provided.

According to some further embodiments of the invention, the energy absorbing section comprises a trigger mechanism for yielding a high crush force efficiency. The crush force efficiency represents the ratio of an initial force peak compared to a mean crushing force.

According to some further embodiments of the invention, the pressure bulkhead device further comprises a bulkhead section, which is arranged adjacent to the energy absorbing section in relation to the vertical direction. For example, the bulkhead section is arranged at an upper end region of the first side and the second side in relation to the vertical direction. The bulkhead section can have a flat, hemispherical, dome-like or corrugated shape. In other words, the first side and/or the second side can have a flat, hemispherical, dome-like or corrugated shape in the bulkhead section. Thus, the flat or corrugated shape can minimize a required space for the pressure bulkhead device.

According to some further embodiments of the invention, the pressure bulkhead device further comprises a support structure, which extends substantially perpendicular to the vertical direction and separates the energy absorbing section from the bulkhead section. Alternatively or additionally, the support structure, can extend substantially perpendicular to the longitudinal direction. The support structure can be configured curved, straight or combinations thereof.

According to some further embodiments of the invention, the energy absorbing section comprises at least one of the group of a metallic material, a fiber-reinforced plastic material and a fiber-metal laminate material. Thus, a material can be used for the energy absorbing section that is well tested and approved in the field of aircraft fuselages. In particular, the structure unit and/or the energy absorbing mechanism is made of at least one of the group of a metallic material, a fiber-reinforced plastic material and a fiber-metal laminate material.

Optionally, the pressure bulkhead device can comprise a feedthrough for letting a system, in particular various systems, pass through the pressure bulkhead device.

According to some further embodiments of the invention, the adjacent compartment is configured as a hydrogen tank compartment. By the energy absorbing section of the pressure bulkhead device an energy absorption can also be provided or enabled in a structure that carries a hydrogen tank in the hydrogen tank compartment. Therefore, energy can be absorbed in the energy absorbing section of the pressure bulkhead device and in the structure below the hydrogen tank, in particular when the hydrogen tank is located behind the pressure bulkhead device in relation to a flight direction. Thus, an effective kinetic energy absorption below the hydrogen tank can be provided. The energy absorbing section can render an energy absorber, which is arranged below the hydrogen tank, or the structure that carries the hydrogen tank more effectively.

Alternatively or additionally, the adjacent compartment is configured as a landing gear compartment. In particular, the landing gear compartment can be configured as a landing gear bay. The landing gear compartment can be arranged at a center region of the aircraft fuselage.

Optionally, the support structure of the pressure bulkhead device is configured as or comprises a frame or at least a part of a frame of the aircraft fuselage.

According to some further embodiments of the invention, the aircraft fuselage further comprises a cross beam device for providing a floor structure in the pressurized compartment, wherein the cross beam device corresponds to an upper boundary of the energy absorbing section when viewed in the vertical direction. Thus, the energy absorbing section is arranged below the floor structure of a cargo compartment or a passenger compartment, for example. The complete space below the cargo compartment or below the passenger compartment can be used for energy absorption functionalities, in particular by plastic deformation and/or progressive structural failure.

The present invention is explained more specifically below on the basis of the exemplary embodiments indicated in the schematic figures, in which:
- Fig. 1: shows a schematic illustration of an aircraft comprising an aircraft fuselage according to an embodiment of the invention;
- Fig. 2: shows a schematic perspective view of a pressure bulkhead device for an aircraft fuselage according to a further embodiment of the invention;
- Fig. 3: shows a schematic perspective view of a pressure bulkhead device for an aircraft fuselage comprising an energy absorbing section and a bulkhead section according to a further embodiment of the invention;
- Fig. 4: shows a schematic front view of a pressure bulkhead device for an aircraft fuselage according to a further embodiment of the invention, comprising a support structure, which separates an energy absorbing section from a bulkhead section;
- Fig. 5: shows a schematic illustration in a side view of an aircraft fuselage according to a further embodiment of the invention comprising the pressure bulkhead device of Fig. 4;
- Fig. 6: shows a schematic illustration of an aircraft fuselage according to a further embodiment of the invention comprising the pressure bulkhead device of Fig. 3;
- Figs. 7a-7f: show schematic illustrations of different cross-sectional shapes of a structural unit for the energy absorbing section of a pressure bulkhead device;
- Fig. 8: shows a schematic illustration in a side view of an aircraft fuselage according to a further embodiment of the invention comprising a hydrogen tank compartment.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

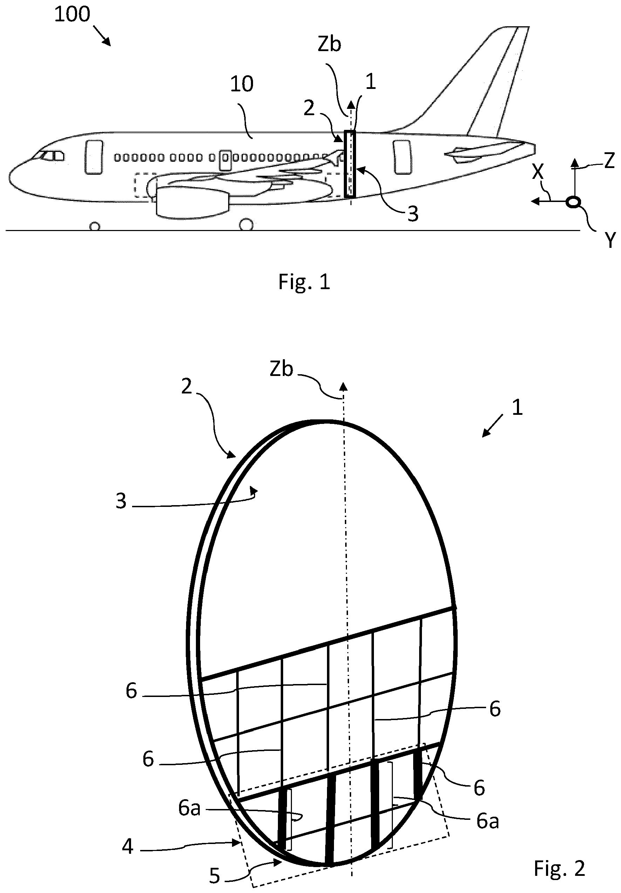

Fig. 1 shows a schematic illustration of an aircraft 100 comprising an aircraft fuselage 10 according to an embodiment of the invention.

The aircraft fuselage 10 comprises a longitudinal direction X, which substantially corresponds to a flight direction of the aircraft 100. Furthermore, the aircraft fuselage 10 comprises a transverse direction Y and a vertical direction Z.

The aircraft fuselage 10 can further comprise a frame extending circumferentially around the longitudinal direction. Stringers can be provided for stiffening the aircraft fuselage 10, wherein the stringers are attached to the frame.

Further, the aircraft fuselage 10 comprises a pressure bulkhead device 1, which will be described in further detail in Figs. 2 to 8. The pressure bulkhead device 1 comprises a first side 2 extending along a vertical direction Zb and facing a pressurizable compartment and a second side 3 arranged opposite the first side 2, wherein the first side 2 is pressurizable with an internal pressure that is higher than an ambient pressure being present at the second side 3. Moreover, the pressure bulkhead device 1 comprises an energy absorbing section 4, which is configured to absorb impact energy, and is arranged at least at a lower end region 5 of the first side 2 and the second side 3 in relation to the vertical direction Zb.

The pressure bulkhead device 1 can be attached to the frame of the aircraft fuselage 10, for example by a corresponding flange for attaching the pressure bulkhead device 1. Furthermore, stringer couplings at the stringers can be used to mechanically connect the pressure bulkhead device 1 to the fuselage shells around the circumference of the aircraft fuselage 10.

The vertical direction Zb of the pressure bulkhead device 1 has an angle in the range of about 60° to about 120°, for example in the range of about 75° to about 105°, in particular in the range of about 82° to about 98°, more preferably an angle of about 90°, relative to the longitudinal direction X of the aircraft fuselage 10 or relative to a transverse direction Y of the aircraft fuselage 10.

Fig. 2 shows a schematic perspective view of a pressure bulkhead device 1 for an aircraft fuselage 10 according to a further embodiment of the invention.

The pressure bulkhead device 1 comprises a first side 2, a second side 3 and an energy absorbing section 4.

The first side 2 extends along a vertical direction Zb and faces a pressurizable compartment like a passenger compartment or a cargo compartment.

The second side 3 is arranged opposite the first side 2, wherein the first side 2 is pressurizable with an internal pressure that is higher than an ambient pressure being present at the second side 3.

The energy absorbing section 4 or energy absorbing mechanism, respectively, is configured to absorb impact energy by a plastic deformation and/or by progressive structural failure. Furthermore, the energy absorbing section 4 is arranged at a lower end region 5 of the first side 2 and the second side 3 in relation to the vertical direction Zb. Exemplarily, the energy absorbing section 4 forms a bottom part of the pressure bulkhead device 1.

Alternatively or additionally, the energy absorbing section 4 can be configured to provide at least two predetermined energy absorption stages each having a different energy absorption capacity. As a result, a gradual or a cascaded energy absorption behavior can be provided.

Here, the energy absorbing section 4 exemplarily comprises a flat shape. That means, the first side 2 and the second side 3 can comprise a flat shape in the energy absorbing section 4.

Further, the pressure bulkhead device 1 can comprise a structural unit 6, which is configured to stiffen the pressure bulkhead device 1. Thereby, at least an area 6a of the structural unit 6 can extend in the energy absorbing section 4. In particular, the at least an area 6a of the structural unit 6 is configured to absorb impact energy by a plastic deformation and/or progressive structural failure of the at least an area 6a of the structural unit 6. As it is illustrated in Fig. 2, the structural unit 6 can extend substantially in the vertical direction Zb. The structural unit 6 can be configured to stiffen the energy absorbing section 4. Thus, the energy absorbing section 4 can be stiffened by the structural unit 6 and can also provide the energy absorbing functionality in the vertical direction Zb. For example, the structural unit 6 can extend in the pressure bulkhead device 1, so in the energy absorbing section 4 and at least another section of the pressure bulkhead device 1.

Furthermore, the at least an area 6a of the structural unit 6 can comprise a curved, rectangular, triangular, corrugated and/or square cross-sectional profile shape. Hence, easy to manufacture profile shapes can be used, wherein the energy absorbing capabilities of such profile shapes are well known.

The structural unit 6 may further comprise a cross-sectional geometry that varies along the vertical direction Zb. For example, the cross-sectional geometry increases at least sectionwise along the vertical direction Zb.

Optionally, the energy absorbing section 4 can comprise a metallic material, a fiber-reinforced plastic material, a fiber-metal laminate material or combinations thereof.

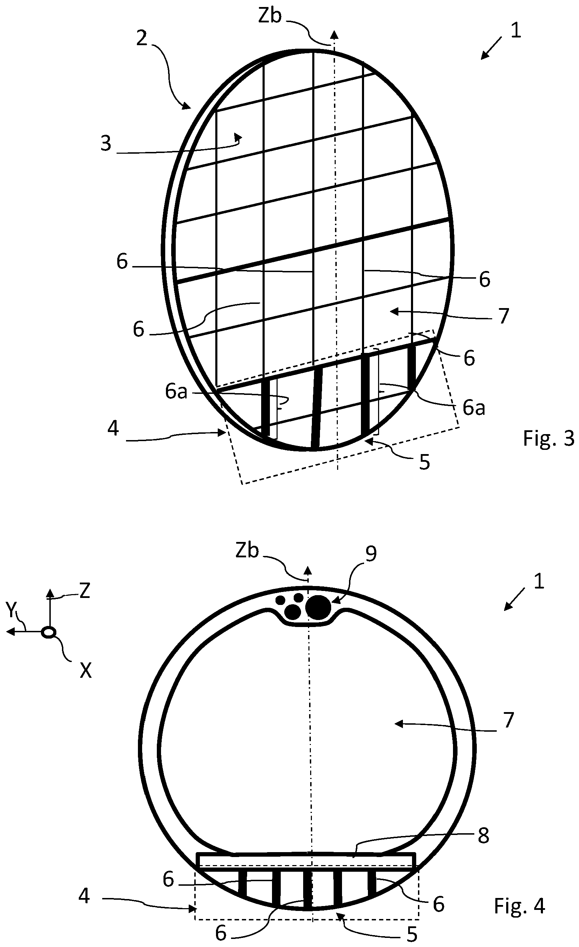

Fig. 3 shows a schematic perspective view of a pressure bulkhead device 1 for an aircraft fuselage 10 comprising an energy absorbing section 4 and a bulkhead section 7 according to a further embodiment of the invention.

The pressure bulkhead device 1 of Fig. 3 substantially corresponds to the pressure bulkhead device 1 of Fig. 2, but differs in that it comprises the bulkhead section 7 and in that the structural unit 6 extends through the energy absorbing section 4 and through the bulkhead section 7. The bulkhead section 7 is arranged adjacent to the energy absorbing section 4 in relation to the vertical direction Zb.

The structural unit 6 may comprise a cross-sectional geometry that varies along the vertical direction Zb, in particular in the energy absorbing section 4 compared to the bulkhead section 7. Alternatively or additionally, a material of the structural unit 6 can be varied along the vertical direction Zb.

Moreover, the structural unit 6 can comprise at least two parts, wherein a first part is arranged in the energy absorbing section 4 and a second part is arranged in the bulkhead section 7 having different mechanical properties and/or dimensions than the first part of the structural unit 6.

Fig. 4 shows a schematic front view of a pressure bulkhead device 1 for an aircraft fuselage 10 according to a further embodiment of the invention, comprising a support structure 8, which separates an energy absorbing section 4 from a bulkhead section 7.

Here, the bulkhead section 7 is arranged above the energy absorbing section 4 in relation to the vertical direction Zb. The support structure 8 extends substantially perpendicular to the vertical direction Zb and separates the energy absorbing section 4 from the bulkhead section 7. The support structure 8 can be configured curved, straight or combinations thereof.

Further, the pressure bulkhead device 1 can comprise a structural unit 6, which is configured to stiffen the energy absorbing section 4. Thereby, the structural unit 6 can extend in the energy absorbing section 4. In particular, the structural unit 6 is configured to absorb impact energy by a plastic deformation and/or by a progressive structural failure of structural unit 6. In particular, the structural unit 6 can extend substantially in the vertical direction Zb. The structural unit 6 can be configured to stiffen the energy absorbing section 4. Thus, the energy absorbing section 4 can be stiffened by the structural unit 6 and can also provide the energy absorbing functionality in the vertical direction Zb.

Optionally, the pressure bulkhead device 1 can comprise a feedthrough 9 for letting a system or various systems pass through the pressure bulkhead device 1. For example, the feedthrough 9 is arranged at an upper end region of the pressure bulkhead device 1 in relation to the vertical direction Zb.

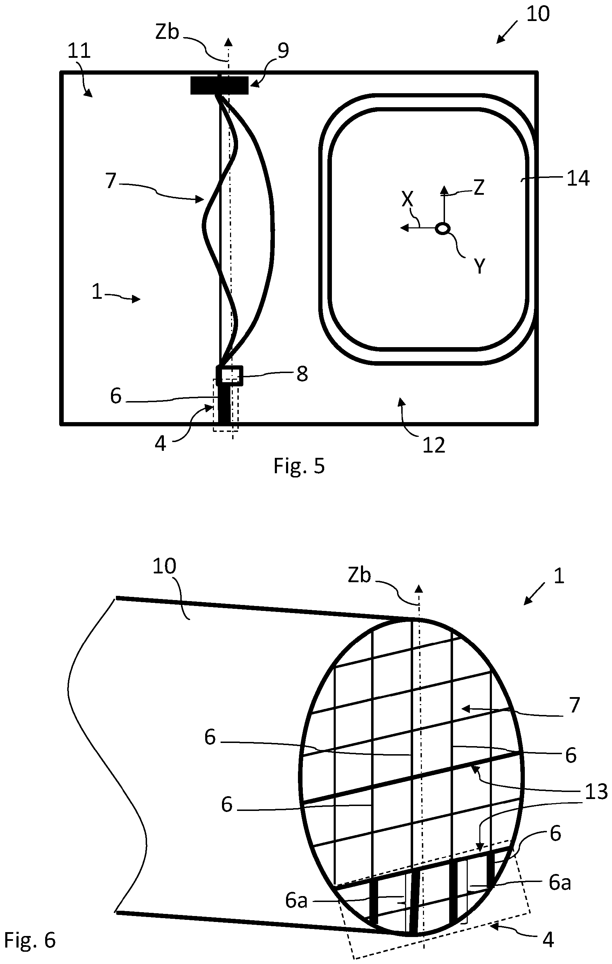

Fig. 5 shows a schematic illustration of an aircraft fuselage 10 according to a further embodiment of the invention comprising the pressure bulkhead device 1 of Fig. 4.

The aircraft fuselage 10 comprises a pressurizable compartment 11, which is pressurizable with an internal pressure, and an adjacent compartment 12, which comprises an ambient pressure that is lower than the internal pressure.

The aircraft fuselage 10 further comprises a pressure bulkhead device 1 according to one of the preceding claims, wherein the pressure bulkhead device 1 separates the pressurizable compartment 11 from the adjacent compartment 12. The adjacent compartment 12 is exemplarily configured as a hydrogen tank compartment. The hydrogen tank compartment 12 can comprise at least one hydrogen tank 14. The hydrogen tank 14 can be carried by a structure.

For example, the support structure 8 of the pressure bulkhead device 1 is configured as a frame or at least a part of a frame of the aircraft fuselage 10.

Exemplarily, the energy absorbing section 4 can comprise a flat shape. In other words, the first side 2 and/or the second side 3 can comprise a flat shape in the energy absorbing section 4. Thus, the flat shape can minimize a required space for the pressure bulkhead device 1.

The bulkhead section 7 can have a hemispherical, dome-like or corrugated shape. In other words, the first side 2 and/or the second side 3 can have a hemispherical, dome-like or corrugated shape in the bulkhead section 7. For example, the corrugated shape can minimize a required space for the pressure bulkhead device 1.

By the energy absorbing section 4 of the pressure bulkhead device 1 an energy absorption can also be provided or enabled in the structure that carries the hydrogen tank 14 in the hydrogen tank compartment 12. Therefore, energy can be absorbed in the energy absorbing section 4 of the pressure bulkhead device 1 and in the structure below the hydrogen tank 14, in particular when the hydrogen tank 14 is located behind the pressure bulkhead device 1 in relation to a flight direction.

Fig. 6 shows a schematic illustration of an aircraft fuselage 10 according to a further embodiment of the invention comprising the pressure bulkhead device 1 of Fig. 3.

Here the pressure bulkhead device 1 further comprises a cross beam device 13 for providing a floor structure in the pressurized compartment 11. The cross beam device 13 can be used for the floor structure of a cargo compartment or a passenger compartment. Thereby, the cross beam device 13 may correspond to an upper boundary of the energy absorbing section 4 when viewed in the vertical direction Zb. Thus, the energy absorbing section 4 is arranged below the floor structure of the cargo compartment or the passenger compartment, for example. As it is schematically illustrated in Fig. 6, the complete space below the cargo compartment, indicated by the lower cross beam device 13, can be used for energy absorption functionalities, in particular by plastic deformation and/or by a progressive structural failure.

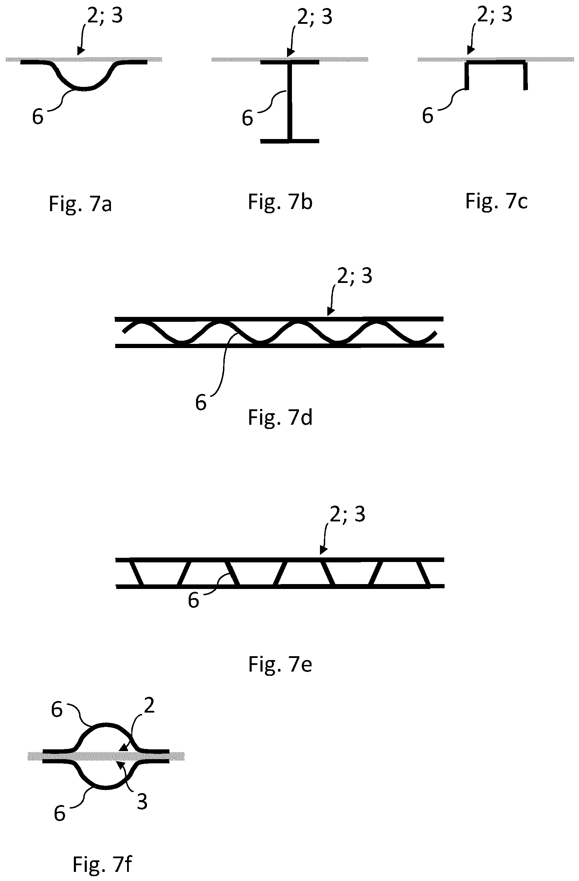

Figs. 7a-7f show schematic illustrations of different cross-sectional shapes of a structural unit 6 for the energy absorbing section 4 of a pressure bulkhead device 1. The structural unit 6 is arranged at the first side 2 or at the second side 3 of the pressure bulkhead device 1. Specifically in Fig. 7f, the structural unit 6 is exemplarily arranged at the first side 2 and at the second side 3 of the pressure bulkhead device 1.

More particularly, Fig. 7a shows the structural unit 6 comprising a curved cross-sectional profile shape. Fig. 7b shows the structural unit 6 comprising a double-T cross-sectional profile shape. Fig. 7c shows the structural unit 6 comprising a U-shaped cross-sectional profile shape. Fig. 7d shows the structural unit 6 comprising a corrugated, in particular sinusoidal, cross-sectional profile shape. Fig. 7e shows the structural unit 6 comprising a corrugated, in particular trapezoidal, cross-sectional profile shape. In particular, the at least an area 6a of the structural unit 6 comprises one of the cross-sectional shapes, as illustrated in Figs. 7a-7f. Each of the shapes as illustrated in Figs. 7a-7e can be arranged at the first side 2 or at the second side 3 or at both the first and the second side 2, 3.

Additionally, the cross-sectional geometry of the structural unit 6 can vary along the vertical direction Zb. For example, the cross-sectional geometry increases at least sectionwise along the vertical direction Zb.

For example, the structure unit 6 is made of a metallic material, a fiber-reinforced plastic material, a fiber-metal laminate material or a compound thereof.

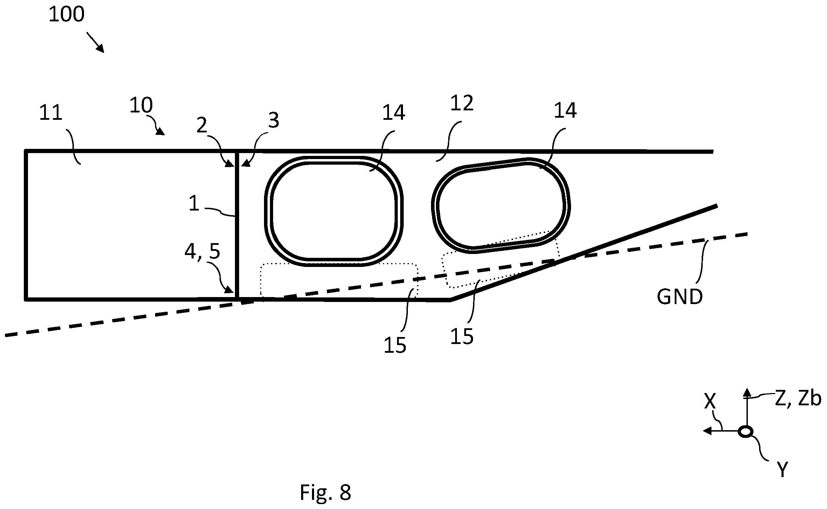

Fig. 8 shows a schematic illustration in a side view of an aircraft fuselage 10 according to a further embodiment of the invention comprising a hydrogen tank compartment 12.

The aircraft fuselage 10 can be configured substantially as the aircraft fuselage of Figs. 1, 5 or 6. For example, the aircraft fuselage 10 can be configured and used for a hydrogen-powered aircraft. Therefore, the hydrogen tank compartment 12 can carry at least one hydrogen tank 14. The at least one hydrogen tank 14 can each be carried by a structure 15.

The pressure bulkhead device 1 comprises a first side 2, a second side 3 and an energy absorbing section 4. The first side 2 extends along the vertical direction Zb and faces a pressurizable compartment like a passenger compartment 11 or a cargo compartment. The second side 3 is arranged opposite the first side 2 facing the hydrogen tank compartment 12.

The energy absorbing section 4 or energy absorbing mechanism, respectively, is configured to absorb kinetic energy by a plastic deformation and/or by a progressive structural failure. Furthermore, the energy absorbing section 4 is arranged at a lower end region 5 of the first side 2 and the second side 3 in relation to the vertical direction Zb.

By the energy absorbing section 4 of the pressure bulkhead device 1 an energy absorption can also be provided or enabled in the structure 15 that carries the hydrogen tank 14 in the hydrogen tank compartment 12. Therefore, energy can be absorbed in the energy absorbing section 4 of the pressure bulkhead device 1 and in the structure 15 below the hydrogen tank, in particular when the hydrogen tank 14 is located behind the pressure bulkhead device 1 in relation to a flight direction which corresponds to the longitudinal axis X of the aircraft fuselage.

The dashed line GND indicates a ground surface that the aircraft fuselage 10 may potentially impact or collide with. Without an energy absorbing section 4, the space of the structure 15, which is illustrated above the dashed line GND, could only be partially used for energy absorption, since a pressure bulkhead without the energy absorbing section 4 would have a much stiffer behavior with small deformations in a potential impact scenario.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: pressure bulkhead device
- 2: first side
- 3: second side
- 4: energy absorbing section
- 5: lower end region
- 6: structural unit
- 6a: at least an area of the structural unit
- 7: bulkhead section
- 8: support structure
- 9: feedthrough
- 10: aircraft fuselage
- 11: pressurizable compartment
- 12: adjacent compartment
- 13: cross beam device
- 14: hydrogen tank
- 15: structure
- 100: aircraft

- X: longitudinal direction of the aircraft fuselage
- Y: transverse direction of the aircraft fuselage
- Z: vertical direction of the aircraft fuselage
- Zb: vertical direction of the pressure bulkhead device
- dashed line: GND (ground) surface

## Claims

1. Pressure bulkhead device (1) for an aircraft fuselage (10), the pressure bulkhead device (1) comprising:
a first side (2) extending along a vertical direction (Zb) and facing a pressurizable compartment;
a second side (3) arranged opposite the first side (2), wherein the first side (2) is pressurizable with an internal pressure that is higher than an ambient pressure being present at the second side (3); and
an energy absorbing section (4), which is configured to absorb impact energy, and is arranged at least at a lower end region (5) of the first side (2) and the second side (3) in relation to the vertical direction (Zb).

2. Pressure bulkhead device (1) according to claim 1, wherein the energy absorbing section (4) comprises a flat or corrugated shape.

3. Pressure bulkhead device (1) according to claim 1 or 2, further comprising a structural unit (6), which is configured to stiffen the pressure bulkhead device 1, wherein at least an area (6a) of the structural unit (6) extends in the energy absorbing section (4), wherein the at least an area (6a) of the structural unit (6) is configured to absorb impact energy by a plastic deformation and/or by a progressive structural failure of the at least an area (6a) of the structural unit (6).

4. Pressure bulkhead device (1) according to claim 3, wherein the at least an area (6a) of the structural unit (6) comprises a rectangular, triangular, corrugated and/or square cross-sectional profile shape.

5. Pressure bulkhead device (1) according to claim 3 or 4, wherein the structural unit (6) comprises a cross-sectional geometry that varies along the vertical direction (Zb).

6. Pressure bulkhead device (1) according to one of the preceding claims, wherein the energy absorbing section (4) is configured to provide a stable, progressive energy absorption in the vertical direction (Zb).

7. Pressure bulkhead device (1) according to one of the preceding claims, wherein the energy absorbing section (4) is configured to provide at least two predetermined energy absorption stages each having a different energy absorption capacity.

8. Pressure bulkhead device (1) according to one of the preceding claims, wherein the energy absorbing section (4) comprises a trigger mechanism for yielding a high crush force efficiency.

9. Pressure bulkhead device (1) according to one of the preceding claims, further comprising a bulkhead section (7), which is arranged adjacent to the energy absorbing section (4) in relation to the vertical direction (Zb).

10. Pressure bulkhead device (1) according to claim 9, further comprising a support structure (8), which extends substantially perpendicular to the vertical direction (Zb) and separates the energy absorbing section (4) from the bulkhead section (7).

11. Pressure bulkhead device (1) according to one of the preceding claims,
wherein the energy absorbing section (4) comprises at least one of the group of a metallic material, a fiber-reinforced plastic material and a fiber-metal laminate material.

12. Aircraft fuselage (10) comprising:
a pressurizable compartment (11), which is pressurizable with an internal pressure, and an adjacent compartment (12), which comprises an ambient pressure that is lower than the internal pressure;
a pressure bulkhead device (1) according to one of the preceding claims, wherein the pressure bulkhead device (1) separates the pressurizable compartment (11) from the adjacent compartment (12).

13. Aircraft fuselage (10) according to claim 12, wherein the adjacent compartment (12) is configured as a hydrogen tank compartment and/or a landing gear compartment.

14. Aircraft fuselage (10) according to claim 12 or 13, further comprising a cross beam device (13) for providing a floor structure in the pressurized compartment (11), wherein the cross beam device (13) corresponds to an upper boundary of the energy absorbing section (4) when viewed in the vertical direction (Zb).

15. Aircraft (100) with an aircraft fuselage (10) according to one of the claims 12 to 14.
